# EUROPEAN PATENT APPLICATION

(11) **EP 4 284 016 A1**
(43) Date of publication of application: **29.11.2023**
(21) Application number: 22745335.4
(22) Date of filing: 28.01.2022
(51) Int. Cl.: H04R 1/10, C04B 38/08, C04B 38/00, C04B 26/06

(54) **POROUS BULK MATERIAL AND ELECTRONIC APPARATUS THEREOF, AND APPARATUS CAPABLE OF REDUCING WIND NOISE AND APPLICATION THEREOF**

(30) Priority: 28.01.2021 CN 202110116612
(71) Applicant: SSI New Material (Zhenjiang) Co., Ltd., Jiangsu 212132 (CN)
(72) Inventor: ZHANG, Lei, Zhenjiang, Jiangsu 212132 (CN); GUO, Mingbo, Zhenjiang, Jiangsu 212132 (CN); GONG, Chang, Zhenjiang, Jiangsu 212132 (CN); ZHAO, Junjie, Zhenjiang, Jiangsu 212132 (CN); MA, Yuanhong, Zhenjiang, Jiangsu 212132 (CN); LIU, Renkun, Zhenjiang, Jiangsu 212132 (CN); ZHANG, Hongpeng, Zhenjiang, Jiangsu 212132 (CN)
(74) Representative: Atout PI Laplace
(86) International application number: PCT/CN2022/074628
(87) International publication number: WO 2022/161463

(57) **Abstract**

The present invention provides a porous bulk material and an electronic apparatus thereof, and an apparatus capable of reducing wind noise and an application thereof. The apparatus comprises an external sound channel, a zeolite material, and a sound pickup hole, wherein the zeolite material is disposed between the external sound channel and the sound pickup hole. The present invention further provides an application of the apparatus in an electronic device provided with a microphone. According to the apparatus, the wind noise can be effectively reduced, and the call quality of a communication device is obviously improved.

## Description

### Technical field

The present invention relates to the technical field of electronic devices, and in particular to a porous bulky material, an electronic device, a device capable of reducing wind noise and use thereof.

### Background of Art

Currently, mobile electronic devices such as smartphones, telephones, conventional earphones, Bluetooth earphones, and TWS earphones all have functions of outdoor calling. To realize the call function, a microphone needs to be installed in the housing, and usually the sound hole of the microphone body is connected to the pickup hole of the housing. When the wind blows through the pickup hole, it will cause eddy current noise on the surface of the pickup hole, and from the sound hole of the housing to the sound hole of the microphone, the eddy current noise may be enhanced due to the resonance of air column, and some eddy current noises will also be generated at the sound hole of the microphone. When such eddy current noise is picked up by the microphone, it often cannot allow the other party to hear clearly in an outdoor call. Meanwhile, when we listen to music with noise-canceling earphones, the wind noise cannot be easily recognized by the system, which will also cause the problem of unclear hearing to us.

The existing technical solutions for reducing wind noise are mainly divided into the following four categories: 1. using DSP algorithm to reduce wind noise, which belongs to the category of active noise reduction; 2. using acoustic approaches, including the selection of acoustic structures and acoustic materials with reasonable configuration of acoustic parameters, and suitable microphone units, which belongs to passive noise reduction; 3. using the principle of bone conduction to suppress wind noise; 4. the combination of the above three methods.

However, the common technical solutions also have corresponding disadvantages: 1. the DSP algorithm reduces wind noise with a high cost, and it will affect the sound quality to some extent; 2. the existing portable outdoor communication equipment is getting smaller and smaller, and conventional acoustic materials, such as foams, can no longer play a role in an extremely small space; 3. bone conduction technology has high requirements for the process, and bone conduction earphones have sound leakage problems, and currently, earphones using bone conduction technology are generally large in size.

### Summary of the Invention

In order to solve the above problems, an object of the present invention is to provide a porous bulky material and an electronic device, a device capable of reducing wind noise and use thereof. Such devices can effectively reduce wind speed, have a good noise reduction effect, and facilitate the improvement in call quality.

In order to achieve the above object, the present invention provides a porous bulky material, wherein the raw material of the porous bulky material comprises zeolite, an adhesive and a dispersant, wherein the mass of the solid component of the adhesive is 1 to 20% of the mass of the zeolite, and the mass of the dispersant is 1 to 3% of the mass of the zeolite.

In a specific embodiment of the present invention, the porous bulky material generally has a multi-stage pore structure, that is, a porous material, so as to lower wind speed and reduce eddy noise. In some specific embodiments, the porous bulky material generally comprises first-stage pores with a pore size of 0.3 nm to 0.7 nm, second-stage pores with a pore size of 10 nm to 50 nm and third-stage pores with a pore size of 2 µm to 200 µm. In some specific embodiments, the third-stage pores include intergranular interstitial pores with a pore size of 2 µm to 10 µm and/or array macropores with a pore size of 10 µm to 200 µm, and the pore volume of the intergranular interstitial pores may be 1 to 5% of the pore volume of the third-stage pores. The array macropores may be macropores formed by the array needle plate completely penetrating or partially penetrating the porous bulky material.

In some specific embodiments, the zeolite material may comprise one or a combination of two or more of MFI structure molecular sieve, FER structure molecular sieve, CHA structure molecular sieve, MEL structure molecular sieve, TON structure molecular sieve, MTT structure molecular sieve, and ZSM-5 molecular sieve. The zeolite generally has a particle size of 0.5 µm to 10 µm. The zeolite generally comprises micropores with a pore size of 0.3 nm to 0.7 nm and mesopores with a pore size of 10 nm to 30 nm, wherein the pore volume of the mesopores of the zeolite is generally 20 to 45%, preferably 25 to 35% of the total pore volume of the zeolite.

In a specific embodiment of the present invention, the adhesive may include an organic adhesive and/or an inorganic adhesive, generally in the form of a suspension or a sol. Herein, the organic adhesive may include one or a combination of two or more of polyacrylate suspension, polystyrene acetate suspension, polyvinyl acetate suspension, polyethylvinyl acetate suspension and polybutadiene rubber suspension, and the inorganic adhesive may include silica sol and/or alumina sol. The mass of the solid component of the adhesive is preferably 5 to 15% of the mass of the porous bulky material.

In a specific embodiment of the present invention, the dispersant may include one or a combination of two or more of ethanol, ethylene glycol, glycerin, sodium hexametaphosphate and sodium dodecylbenzenesulfonate.

In a specific embodiment of the present invention, the porous bulky material may further comprise a pore-forming auxiliary agent and/or a reinforcing auxiliary agent. The pore-forming auxiliary agent can increase the pore volume of the porous bulky material, and generally includes one or a combination of two or more of ammonia water, hydrogen peroxide, ammonium chloride, ammonium nitrate, and sodium carbonate; the mass of the pore-forming auxiliary agent is generally 0.5 to 5%, preferably 1 to 3% of the mass of the zeolite. The reinforcing auxiliary agents can improve the mechanical properties of the porous bulky material, and generally includes a fiber material. The fiber in the fiber material has a diameter of generally 1 µm to 10 µm, and a length of generally 20 µm to 1 mm. The fiber material may include a chemical fiber and/or a plant fiber, wherein the chemical fiber preferably includes an inorganic fiber. The mass of the reinforcing auxiliary agent is generally 3 to 15%, more preferably 5 to 10% of the mass of the zeolite.

In a specific embodiment of the present invention, the porous bulky material may be a bulky material obtained by mixing the zeolite, the adhesive, the dispersant and the auxiliary agent to form a raw material suspension (when the raw material of the porous bulky material comprises a pore-forming auxiliary agent and/or a reinforcing auxiliary agent, the raw material suspension also comprises the pore-forming auxiliary agent and/or the reinforcing auxiliary agent correspondingly), and shaping by one of processing such as extrusion, spray, casting and molding. In some embodiments, the porous material may be further prepared by hot air drying or freeze drying. The resulting porous bulky material generally has a homogeneous characteristic impedance.

In a specific embodiment of the present invention, the porous bulky material may be a bulky material formed by spraying. Specifically, the porous bulky material may be prepared by mixing the zeolite, the adhesive, the dispersant, a filler and the auxiliary agent to form a raw material suspension (when the raw material of the porous bulky material comprises a pore-forming auxiliary agent and/or a reinforcing auxiliary agent, the raw material suspension also comprises the pore-forming auxiliary agent and/or the reinforcing auxiliary agent correspondingly), and then evenly dispersing the raw material suspension on a fiber paper. In some specific embodiments, the porous bulky material may be formed by a single fiber paper loaded with the raw material suspension, or may be formed by stacking a plurality of fiber papers loaded with the raw material suspension and then molding before drying. Due to different degrees of penetration and coating of the raw material suspension on the fiber paper, the porous bulky material obtained by this preparation method is generally a material having a characteristic impedance that varies from layer to layer.

In the porous bulky material, the fiber paper generally includes one or a combination of two or more of polyester fiber, polyamide fiber, polyacrylonitrile fiber, polyvinyl formal fiber, and PETT (polyethylene terephthalate-polypropylene terephthalate copolyester) fiber. The thickness of the fiber paper (not loaded with raw material suspension) is generally 50 µm to 200 µm, and the thickness of the fiber paper loaded with the raw material suspension is 100 µm to 600 µm. The fiber paper generally has macropores with a pore size of 10 µm to 100 µm, which are macropores with non-uniform particle sizes formed during the preparation of the fiber paper. The porous bulky material further comprises macropores with a pore size of 1 to 100 µm formed by array needle plate completely or partially penetrating the fiber paper. A porous material block comprising the fiber paper in the raw material may also be referred to as a fibrous porous block. In some embodiments, the thickness of the fibrous porous block may be adjusted by the thickness of the fiber or the number of stacks, so that the size of the fibrous porous block matches the size of the space it fills (generally the sound channel structure).

The present invention further provides an electronic device containing the porous bulky material. Specifically, the porous bulky material can be filled in the electronic device (for example, in the sound channel of the electronic device) as a sound-absorbing material to reduce wind noise. In some specific implementations, the electronic device may be an electronic device with a microphone, such as a TWS earphone.

The present invention further provides a device for reducing wind noise, comprising a body, an arc cover and a PCB board; wherein the body is a tubular structure, one end thereof is connected to the PCB board, and the other end thereof is connected to the arc cover, and an internal sound channel is arranged inside the body along the central axis; an external sound channel is arranged inside the arc cover along the horizontal direction, and the external sound channel has a pinwheel-like structure as a whole, including a central cavity communicating with the internal sound channel, and several branch channels arranged in a radial pattern around the central cavity, wherein each branch channel is a streamlined arc structure.

In a specific embodiment of the present invention, the branch channel of the external sound channel is in a streamlined arc shape, that is, the opening of each branch channel extends from the outside of the arc cover to the central cavity along an arc trajectory. When the environmental wind enters the external sound channel from the external port, the streamlined arc structure of each branch channel can increase the moving distance and time of the environmental wind, which is conducive to the attenuation of the wind speed and achieves a noise reduction effect.

In a specific embodiment of the present invention, the body and the arc cover may be a integrated structure. The plane where the external sound channel is located is generally parallel or approximately parallel to the horizontal plane where the body is connected to the arc cover. Each branch channel in the external sound channel may be evenly distributed n a radial pattern around the central cavity. The direction away from the PCB board is defined as "outside", and the diameter of each branch channel in the external sound channel generally decreases gradually from outside to inside. In some specific implementations, there are generally two or more, for example, two, three, four or more channels in the external sound channels.

In a specific embodiment of the present invention, the axis of the internal sound channel may be perpendicular to the plane where the external sound channel is located. One end of the internal sound channel is in contact with the PCB board, and the other end communicates with the central cavity. The internal sound channel and the external sound channel jointly constitute a pickup channel of the device.

In a specific embodiment of the present invention, the diameter of each channel in the external sound channel may gradually decrease from the outside of the device to the inside of the device.

In a specific embodiment of the present invention, the center of the PCB board is generally provided with a pickup hole, which generally communicates with the internal sound channel, and further communicates with the central cavity of the external sound channel.

In a specific embodiment of the present invention, the horizontal section (in the direction parallel to the plane where the PCB board is located) of the internal sound channel may be circular in shape. The longitudinal section (in the direction perpendicular to the plane where the PCB board is located) of the internal sound channel may be rectangular or trapezoidal in shape, that is, the overall internal sound channel may be cylindrical or frustoconical. When the longitudinal section of the internal sound channel is trapezoidal, the diameters of two ports of the internal sound channel match the diameter of the central cavity of the external sound channel and the diameter of the pickup hole, respectively; when the axial section of the internal sound channel is trapezoidal in shape, the diameter of the port on the side of the internal sound channel close to the PCB board may be greater than or equal to the diameter of the pickup hole. In some specific embodiments, the diameter of the pickup hole may be smaller than or equal to the diameter of the central cavity of the external sound channel.

In a specific embodiment of the present invention, the internal sound channel may be filled with a porous bulky material to further reduce the wind speed of the incoming environmental wind, and the porous bulky material may be the above-mentioned porous bulky material, or other porous bulky materials that can be used as a sound-absorbing material available in the art. The porous bulky material can be fixed in the internal sound channel to avoid detaching.

In a particular embodiment of the present invention, the porous bulky material filled in the internal sound channel may have a homogeneous characteristic impedance, or may have a characteristic impedance that varies from layer to layer. The porous bulky material having a characteristic impedance that varies from layer to layer is more conducive to the gradual reduction of environmental wind during the flow thereof in the internal sound channel, thereby reducing wind noise. In some specific embodiments, the impedance of the porous bulky material varies from layer to layer along the direction from the central cavity of the external sound channel to the PCB board, for example, the characteristic impedance of the porous bulky material may vary from layer to layer in the order of progressively increasing in the direction from the central cavity of the external sound channel to the PCB board.

The present invention further provides use of the above-mentioned device capable of reducing wind noise in an electronic device having a microphone. For example, the above-mentioned device can be applied to a TWS earphone to reduce the influence of wind noise on the call quality.

The present invention further provides a device capable of reducing wind noise, comprising an external sound channel, a zeolite material, and a pickup hole, wherein the zeolite material is arranged between the external sound channel and the pickup hole; environmental wind enters the device from the external sound channel, contact the zeolite material, and then reach the pickup hole.

In a specific embodiment of the present invention, the device capable of reducing wind noise may be further provided with an internal sound channel, wherein the pickup hole, the internal sound channel, and the external sound channel generally communicate in this order, and the zeolite material is generally filled in the internal sound channel.

In some specific embodiments, the zeolite material may comprise one or a combination of two or more of MFI structure molecular sieve, FER structure molecular sieve, CHA structure molecular sieve, MEL structure molecular sieve, TON structure molecular sieve, MTT structure molecular sieve, and ZSM-5 molecular sieve.

In some specific embodiments, the particle size of the zeolite material is generally 0.5 µm to 10 µm.

In some specific embodiments, the zeolite material generally comprises micropores with a pore size of 0.3 nm to 0.7 nm and mesopores with a pore size of 10 nm to 30 nm.

In some specific embodiments, the pore volume of the mesopores of the zeolite material is generally 20 to 45%, preferably 25 to 35% of the total pore volume of the zeolite material.

In a specific embodiment of the present invention, the device capable of reducing wind noise may further comprise an arc cover, and the external sound channel is arranged inside the arc cover along the horizontal direction of the arc cover. Specifically, the external sound channel may have a pinwheel-like structure as a whole, and may include a central cavity and several branch channels arranged in a radial pattern around the central cavity, wherein the central cavity communicates with the internal sound channel, and each branch channel is a streamlined arc structure. More specifically, each branch channel of the external sound channel may be evenly distributed around the central cavity.

In a specific embodiment of the present invention, the device capable of reducing wind noise may further include a PCB board, and the pickup hole is generally arranged at the center of the PCB board.

In a specific embodiment of the present invention, the device capable of reducing wind noise may further comprise a body, wherein one end of the body is connected to the PCB board, and the other end is connected to the arc cover, and the internal sound channel is arranged inside the body along the central axis of the body. In some specific embodiments, the body may be a tubular structure.

In a specific embodiment of the present invention, in the device capable of reducing wind noise, the diameter of the port on the side of the internal sound channel close to the external sound channel generally matches the diameter of the central cavity.

In a specific embodiment of the present invention, in the device capable of reducing wind noise, the diameter of the port on the side of the internal sound channel close to the PCB board is generally greater than or equal to the diameter of the pickup hole.

The present invention further provides use of the above-mentioned device capable of reducing wind noise in an electronic device having a microphone. For example, the above-mentioned device can be applied to a TWS earphone to reduce the influence of wind noise on the call quality.

The beneficial effects of the present invention are as follows.
1. The device capable of reducing wind noise provided by the present invention has a simple structure, good and stable performances, a low cost and a small and portable size, and by providing a zeolite material or a porous material block containing the zeolite material between the external sound channel and the pickup hole, it can effectively reduce the wind noise of the device, improve the sound quality and call quality, and applied to electronic devices with a microphone (such as TWS earphones).
2. Further, the external sound channel of the device provided by the present invention may have a pinwheel-like structure and have several channels communicating with the outside, and when the environmental wind enters the external sound channel, the wind speed can be effectively lowered, so as to achieve a good noise reduction effect; the internal sound channel of the device may also be filled with a porous bulky material, which can further lower the wind speed, thereby reducing wind noise. Still further, when the porous bulky material has a characteristic impedance that varies from layer to layer, the internal sound channel will have different characteristic impedances with the change in the position of the porous bulky material, which can more effectively lower the wind speed and produce an effect of reducing wind noise. Through the special design of the external sound channel structure and the filling of a porous bulky material in the internal sound channel, the wind speed can be gradually lowered when the environmental wind enters the above device and moves to the pickup hole, the wind noise can be reduced synergistically, and the sound quality and call quality can be effectively improved, which can be applied to electronic devices with a microphone (such as TWS earphones).

### Brief Description of Drawings

FIG. 1 is a schematic diagram of the third-stage pore distribution of the porous bulky material in Example 1.
FIG. 2 is an axis side drawing of the appearance of the device capable of reducing wind noise in Examples 3 to 5.
FIG. 3 is an axis side drawing of a section of the device capable of reducing wind noise in Examples 3 to 5.
FIG. 4 is an A-A sectional view of the device capable of reducing wind noise in Examples 3 and 4, where the porous bulky material is not shown.
FIG. 5 is a sectional view of the device capable of reducing wind noise in Examples 3 and 4, where the porous bulky material is shown.
FIG. 6 is an A-A sectional view of the device capable of reducing wind noise in Example 5, where the porous bulky material is not shown.
FIG. 7 is a sectional view of the device capable of reducing wind noise in Examples 5, where the porous bulky material is shown.

Description of numerals of main components:
1: body, 2: arc cover, 3: PCB board, 11: internal sound channel, 21: external sound channel, 211, 212, 213, 214: branch channels of the external sound channel, 31: pickup hole, 4: porous bulky material.

### Detailed Description of Embodiments

In order to have a clearer understanding of the technical features, purposes and beneficial effects of the present disclosure, the technical solutions of the present disclosure will now be described below in details, but it should not be construed as limiting the implementable scope of the present disclosure.

In the description of the present invention, it should be understood that the terms "first" and "second" are used for illustrative purposes only, and cannot be interpreted as indicating or implying the relative importance or implicitly specifying the quantity of the indicated technical features. Thus, the features defined with "first" and "second" may expressly or implicitly include one or more of such features. In the description of the present invention, "several" means two or more, unless specifically defined otherwise.

In a particular embodiment of the present invention, the porous bulky material may be a bulky material obtained by mixing a zeolite material powder, an adhesive, a dispersant (optionally further including a pore-forming auxiliary agent and/or a reinforcing auxiliary agent) to form a raw material suspension, shaping the raw material suspension by one of extrusion, spraying, casting, and molding, and then hot air drying or freeze drying; or may be a bulky material prepared by evenly dispersing the above-mentioned raw material suspension on a fiber paper.

In a specific embodiment of the present invention, the porous bulky material may be a material having multi-stage pores, generally including first-stage pores with a pore size of 0.3 nm to 0.7 nm, second-stage pores with a pore size of 10 nm to 50 nm and third-stage pores with a pore size of 2 µm to 200 µm. In some specific embodiments, the third-stage pores include intergranular interstitial pores with a pore size of 2 µm to 10 µm and/or array macropores with a pore size of 10 µm to 200 µm, and the pore volume of the intergranular interstitial pores may be 1 to 5% of the pore volume of the third-stage pores. The array macropores may be macropores formed by pressing with an array needle plate, which is a parallel needle plate formed by etching a silicon substrate, where the diameter of each needle is 10 µm to 200 µm, and the density of the array needles is 30 per square centimeter.

In the porous bulky material, the zeolite material may comprise one or a combination of two or more of MFI structure molecular sieve, FER structure molecular sieve, CHA structure molecular sieve, MEL structure molecular sieve, TON structure molecular sieve, and MTT structure molecular sieve. The zeolite material may have a particle size of 0.5 µm to 10 µm, and it generally has micropores with a pore size of 0.3 to 0.7 nm and mesopores with a pore size of 10 to 30 nm. The pore volume of the mesopores is generally 20 to 45%, preferably 25 to 35% of the total pore volume of the zeolite material.

In the porous bulky material, the adhesive may be in the form of a suspension or a sol, and the mass of the solid component of the adhesive is generally controlled at 1% to 20%, preferably 5 to 15% of the mass of the zeolite material. The adhesive may comprise an organic adhesive and/or an inorganic adhesive. Herein, the organic adhesive may include one or a combination of two or more of polyacrylate suspension, polystyrene acetate suspension, polyvinyl acetate suspension, polyethylvinyl acetate suspension and polybutadiene rubber suspension, and the inorganic adhesive may include silica sol and/or alumina sol.

In the porous bulky material, the mass of the dispersant is generally controlled at 1% to 3% of the mass of the zeolite material. The dispersant may include one or a combination of two or more of ethanol, ethylene glycol, glycerin, sodium hexametaphosphate and sodium dodecylbenzenesulfonate.

In the porous bulky material, the auxiliary agent may include a pore-forming auxiliary agent and/or a reinforcing auxiliary agent. The pore-forming auxiliary agent can increase the pore volume of the porous bulky material, and the mass thereof is generally controlled at 0.5% to 5%, preferably 1% to 3% of the mass of the zeolite material. It generally includes one or a combination of two or more of ammonia water, hydrogen peroxide, ammonium chloride, ammonium nitrate, and sodium carbonate. The reinforcing auxiliary agent can improve the mechanical properties of the porous bulky material, and the mass thereof is generally controlled at 3% to 15%, preferably 5% to 10% of the mass of the zeolite material. The reinforcing auxiliary agent generally includes a fiber material, in which the fiber has a diameter of generally 1 µm to 10 µm, and a length of generally 20 µm to 1 mm. The fiber material may include a chemical fiber and/or a plant fiber, wherein the chemical fiber preferably includes an inorganic fiber.

### Example 1

This example provides a porous bulky material, which is a bulky material prepared by a raw material suspension formed from a zeolite material, an adhesive, a dispersant, a pore-forming auxiliary agent and a reinforcing auxiliary agent, and has an overall homogeneous distribution of characteristic impedance. Herein, the zeolite material is a ZSM-5 molecular sieve with a particle size of 1.2 µm, including micropores with an average pore size of 0.748 nm and mesopores with an average pore size of 14.39 nm, wherein the pore volume of mesopores is 29% of the total pore volume of the zeolite material. The adhesive is a polyacrylate suspension, and the mass there of is 9% of the mass of the zeolite material. The dispersant is glycerin, and the mass thereof is 1.5% of the mass of the zeolite. The pore-forming auxiliary agent is ammonia water, and the mass thereof is 2% of the mass of the zeolite material. The reinforcing auxiliary agent is glass fiber, and the mass thereof is 8% of the mass of the zeolite material.

In this example, the porous bulky material is specifically prepared by formulating 100 g of ZSM-5 powder, 100 g of water, 18 g of polyacrylate suspension with a solid content of 50%, 1.5 g of glycerin, 2 g of ammonia water, and 8 g of glass fiber into a homogeneous raw material suspension with ultrasonication for 3 min and stirring for 30 min, introducing the raw material suspension into a preformed mold, freezing at -40°C for molding, sublimating under vacuum at low temperature, decomposing and dehydrating by heating, and forming pores by pressing the dehydrated molded product with an array needle plate, and demolding by pushing up the plate to prepare the porous bulky material.

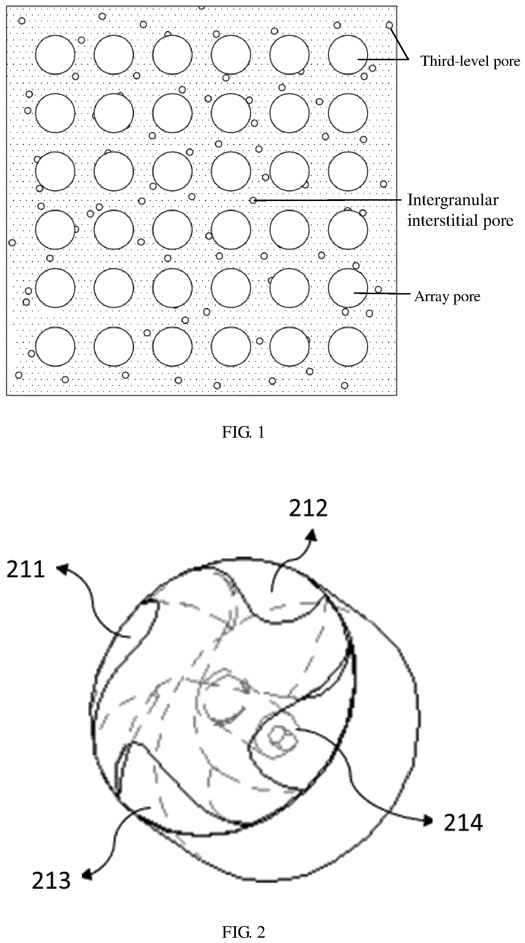

The porous bulky material used in this example has a three-stages pore structure, including first-stage pores with a pore size of 0.748 nm, second-stage pores with a pore size of 14.27 nm, and third-stage pores with an average pore size of 67.9 µm. Among them, the third-stage pores include intergranular interstitial pores (pores generated by grain packing) of 5.6 µm and array macropores with a pore size of 120 µm. The array macropores can be produced by the above-mentioned array needle plate, and the arrangement of the array macropores includes but is not limited to that shown in FIG. 1. The pore size of the intergranular interstitial pores of the porous bulky material may be measured by measuring the pore size of the porous bulky material avoiding the array macropores with a mercury porosimeter, before producing the array macropores in the porous bulky material with the array needle plate.

### Example 2

This example provides a porous bulky material, which is a bulky material prepared by evenly dispersing a raw material suspension formed from a zeolite material, an adhesive, a dispersant and a pore-forming auxiliary agent on a fiber paper. Herein, the zeolite material is a ZSM-5 molecular sieve with a particle size of 1.2 µm, including micropores with an average pore size of 0.748 nm and mesopores with an average pore size of 14.39 nm, wherein the pore volume of mesopores is 29% of the total pore volume of the zeolite material. The adhesive is a polyacrylate suspension, and the mass there of is 7% of the mass of the zeolite material. The dispersant is glycerin, and the mass thereof is 1% of the mass of the zeolite material. The pore-forming auxiliary agent is ammonia water, and the mass there of is 2% of the mass of the zeolite material.

In this example, the porous bulky material is specifically prepared by formulating 100 g of ZSM-5 powder, 100 g of water, 14 g of polyacrylate suspension with a solid content of 50%, 1 g of glycerin and 2 g of ammonia water into a homogeneous suspension with ultrasonication for 3 min and stirring for 30 min, soaking the fiber paper in the slurry for 10 min, squeezing on a plate, freezing at -40°C for shaping, sublimating under vacuum at low temperature, decomposing and dehydrating by heating, forming pores by pressing with an array needle plate, and demolding by pushing up the plate to prepare the porous bulky material. The porous bulky material thus formed has a characteristic impedance that varies from layer to layer.

The porous bulky material in this example has a three-stages pore structure, including first-stage pores with a pore size of 0.748 nm, second-stage pores with a pore size of 14.27 nm, and third-stage pores including macropores with a pore size of 10 µm to 100 µm contained in the fiber paper and macropores with a pore size of 80 µm formed by the array needle plate. In addition, the third-stage pores also include intergranular interstitial pores. However, because the macropores in the fiber paper used in this example play a major role in sound absorption, and the large pore size thereof interferes the measurement results for the pore sizes of the intergranular interstitial pores. Therefore, the specific pore size of the intergranular interstitial pores will not be described here.

### Example 3

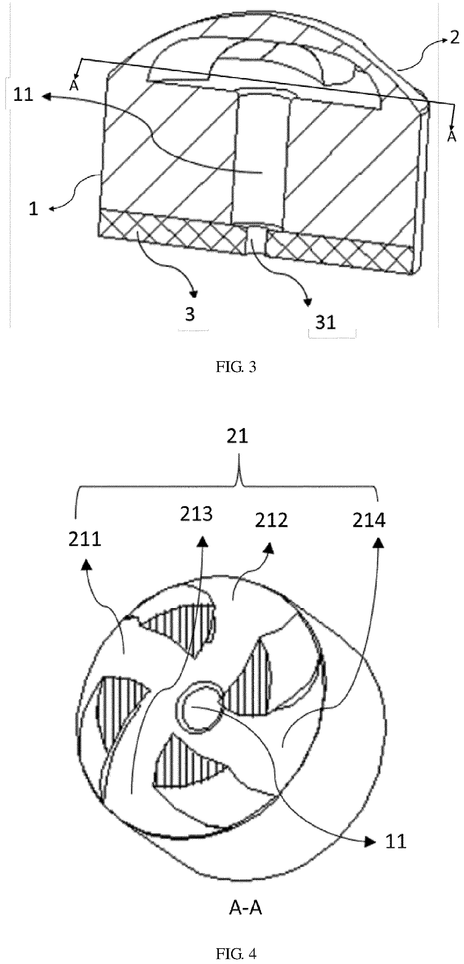

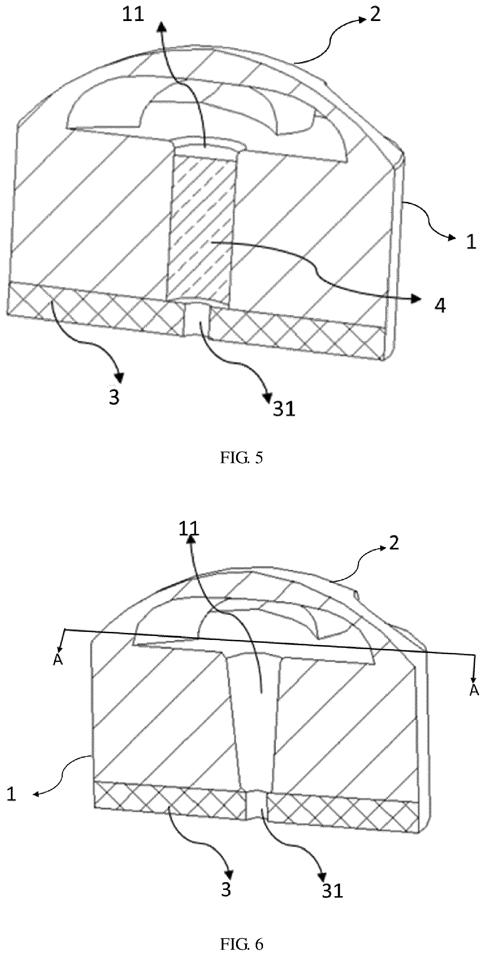

This example provides a device capable of reducing wind noise. FIG. 2 is an axis side drawing of the appearance of the device in this example, and the dotted line in FIG. 2 represents a perspective structure. FIG. 3 is an axial sectional view of the device in this example, FIG. 4 is a sectional view of the A-A plane in FIG. 3, and FIG. 5 is a schematic diagram of the structure of the device filled with the porous bulky material on the basis of FIG. 4.

As shown in FIGs. 2 to 5, the device includes a body 1, an arc cover 2 and a PCB board 3. The body 1 is a tubular structure, of which one end is closed by the PCB board 3, and the other end is closed by the arc cover 2. The body 1, the PCB board 3 and the arc cover 2 together form a cylinder with an arc at one end, which is the entity part of the device.

An external sound channel 21 with a pinwheel-like structure is provided inside the arc cover 2. The external sound channel 21 is composed of a central cavity and branch channels 211, 212, 213 and 214. The central cavity is located at the center of the horizontal plane where the body 1 and the arc cover 2 are connected, and the branch channels 211, 212, 213, and 214 extend evenly and radially to the arc cover 2 with the central cavity as the center, that is, the opening at one end of each branch channel communicates with the central cavity, and the opening at the other end communicates with the outside of the arc cover 2. In the horizontal direction, each branch channel is approximately on the same plane. Each branch channel is a streamlined arc structure in shape, with the diameter gradually decreasing from the outside to the inside.

An internal sound channel 11 is provided inside the body 1 along the central axis, and the axial section of the internal sound channel 11 is rectangular and the cross section thereof is circular. As shown in FIG. 5, the internal sound channel channel 11 is filled with a porous bulky material 4, which is the porous bulky material prepared in Example 1.

The center of the PCB board 3 is provided with a through pickup hole 31. The PCB board 3 used in this example is provided with a microphone.

The pickup hole 31, the internal sound channel 11, and the central cavity communicate in this order. The diameter of the internal sound channel 11 is larger than the diameter of the pickup hole 31 and matches the diameter of the central cavity.

During the use of the device of this example, the environmental wind first enters the device from the port of each branch channel of the external sound channel 21 and has the speed reduced. The environmental wind having the speed preliminarily reduced continues to enter the internal sound channel 11 and contacts the porous bulky material 4. The porous structure in the porous bulky material 4 can further reduce the wind speed. When the speed of the environmental wind is reduced several times, the wind noise produced thereby is greatly reduced, so as to achieve the effect of improving the sound quality.

### Example 4

This example provides a device capable of reducing wind noise. The structure of the device is basically the same as that of the device in Example 3, only except that the porous bulky material filled in the internal sound channel 11 is different. In this example, the porous bulky material prepared in Example 2, which has a characteristic impedance that varies from layer to layer, is used.

During the use of the device of this example, the environmental wind first enters the device from the port of each branch channel of the external sound channel 21 and has the speed reduced. The environmental wind having the speed preliminarily reduced continues to enter the internal sound channel 11 and contacts the porous bulky material 4. The porous structure in the porous bulky material 4 can further reduce the wind speed. Meanwhile, since the bulky body of the fiber paper has a characteristic impedance that varies from layer to layer from top to bottom (along the direction from the external sound channel 21 to the PCB board 3), before the environmental wind reaches the pickup hole 31, the wind noise generated by the environmental wind has been reduced from layer to layer, so as to achieve the effect of reducing the noise interference and improving the call quality.

### Example 5

This example provides a device capable of reducing wind noise.

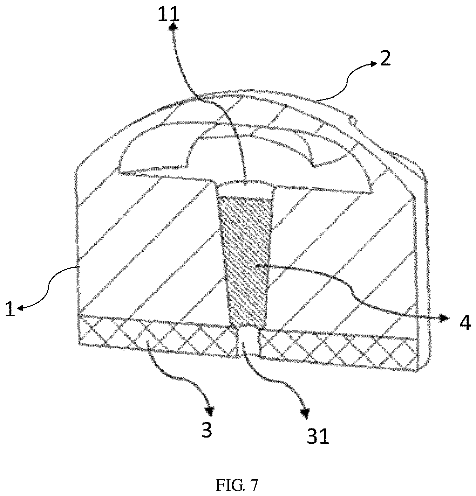

FIG. 2 is an axis side drawing of the appearance of the device in this example, and the dotted line in FIG. 2 represents a perspective structure. FIG. 6 is an axial sectional view of the device in this example, FIG. 4 is a sectional view of the A-A plane in FIG. 6, and FIG. 7 is a schematic diagram of the structure of the device filled with the porous bulky material on the basis of FIG. 6.

As shown in FIGs. 2, 4, 6 and 7, the device includes a body 1, an arc cover 2 and a PCB board 3. The body 1 is a tubular structure, of which one end is closed by the PCB board 3, and the other end is closed by the arc cover 2. The body 1, the PCB board 3 and the arc cover 2 together form a cylinder with an arc at one end, which is the solid part of the device.

An external sound channel 21 with a windmill-like structure is provided inside the arc cover 2. The external sound channel 21 is composed of a central cavity and branch channels 211, 212, 213 and 214. The central cavity is located at the center of the horizontal plane where the body 1 and the arc cover 2 are connected, and the branch channels 11, 12, 21, and 22 extend evenly and radially to the arc cover 2 with the central cavity as the center, that is, the opening at one end of each branch channel communicates with the central cavity, and the opening at the other end communicates with the outside of the arc cover 2. In the horizontal direction, each branch channel is approximately on the same plane. Each branch channel is a streamlined arc structure in shape, with the diameter gradually decreasing from the outside to the inside.

An internal sound channel 11 is provided inside the body 1 along the central axis, and the axial section of the internal sound channel 11 is trapezoidal and the cross section thereof is circular. As shown in FIG. 7, the internal sound channel channel 11 is filled with a porous bulky material 4, which is the porous bulky material prepared in Example 1.

The center of the PCB board 3 is provided with a through pickup hole 31. The PCB board 3 used in this example is provided with a microphone.

The pickup hole 31, the internal sound channel 11, and the central cavity communicate in this order. The diameter of both ends of the internal sound channel 11 matches the diameter of the pickup hole 31 and the diameter of the central cavity in contact with it, respectively.

### Test Example 1

This test example provides the test results of the influence of different porous bulky materials and channel structures on the wind speed. Refer to Table 1 for details. SIMA AS8336 anemometer is used for the wind speed test. Table 1 shows the wind speed test results after passing through the porous bulky materials and different sound channel structures. Experiment 1 is the wind speed after the environmental wind passes through a porous bulky material with unique characteristic impedance (the porous bulky material in Example 1); Experiment 2 is the wind speed after the environmental wind passes through a porous bulky material with a characteristic impedance that varies from layer to layer (the porous bulky material in Example 2); Experiment 3 is the wind speed after the environmental wind passes through the device of Example 3 (not filled with a porous bulky material) having a pinwheel-like external sound channel; Experiment 4 is the wind speed after the environmental wind passes through the device of Example 4 having a pinwheel-like external sound channel and filled with the porous bulky material in Example 2; Experiment 5 is the wind speed that the environmental wind passes through the channel of the microphone of a TWS earphone (not filled with the porous bulky material of the present invention).

The specific structure of the microphone of the TWS earphone used in Experiment 5 is as follows: the sound inlet part has a linear channel, the opening at one end of the sound inlet part forms a sound inlet hole, and the other end of the sound inlet hole is connected to a sound-absorbing cavity, in which a foam is filled to buffer and weaken the airflow, and the end of the sound-absorbing cavity away from the sound inlet hole is the pickup hole of the microphone. The main working principle of the microphone of the TWS earphone is as follows: when the airflow generated by the wind passes through the sound inlet part, the sound inlet hole will weaken the airflow to a certain extent, and then the airflow will be buffered and weakened by the sound-absorbing cavity until reaching the pickup hole of the microphone, which produces a certain buffering effect on the noise signal.

**Table 1 (wind speed: m/s)**

| Initial wind speed | 5 | 4 | 3 | 2 | 1 |
|---|---|---|---|---|---|
| Experiment 1 | 4 | 3.5 | 2 | 1 | 0.5 |
| Experiment 2 | 3 | 2.5 | 2.2 | 1.8 | 0.6 |
| Experiment 3 | 3 | 2 | 1 | 0.5 | 0.3 |
| Experiment 4 | 0 | 0 | 0 | 0 | 0 |
| Experiment 5 | 4.5 | 3.8 | 2.9 | 1.9 | 1 |

It can be seen from Table 1 that the wind speed can be effectively reduced by filling the porous bulky material provided by the present invention and/or the pinwheel-like external sound channel structure; the porous bulky material with a characteristic impedance that varies from layer to layer can reduce the wind speed more significantly than the porous bulky material with unique characteristic impedance. Further, the wind speed can be nearly completely eliminated to remove the wind noise, by using the electronic device having a pinwheel-like external sound channel structure and the porous bulky material having a characteristic impedance that varies from layer to layer filled therein.

## Claims

1. A porous bulky material **characterized in that** the raw material of the porous bulky material comprises zeolite, an adhesive and a dispersant, wherein the mass of the solid component of the adhesive is 1 to 20% of the mass of the zeolite, and the mass of the dispersant is 1 to 3% of the mass of the zeolite.

2. The porous bulky material according to claim 1, wherein the porous bulky material has a hierarchical porous structure;
preferably, the porous bulky material comprises first-level pores with a pore size of 0.3 nm to 0.7 nm, second-level pores with a pore size of 10 nm to 50 nm and third-level pores with a pore size of 2 µm to 200 µm;
more preferably, the third-level pores include intergranular interstitial pores with a pore size of 2 µm to 10 µm and/or array macropores with a pore size of 10 µm to 200 µm;
still further preferably, the pore volume of the intergranular interstitial pores is 1 to 5% of the pore volume of the third-level pores.

3. The porous bulky material according to claim 1 or 2, wherein the zeolite comprises one or a combination of two or more of an MFI structure molecular sieve, an FER structure molecular sieve, a CHA structure molecular sieve, an MEL structure molecular sieve, a TON structure molecular sieve, an MTT structure molecular sieve, and a ZSM-5 molecular sieve;
preferably, the zeolite has a particle size of 0.5 µm to 10 µm;
preferably, the zeolite comprises micropores with a pore size of 0.3 nm to 0.7 nm and mesopores with a pore size of 10 nm to 30 nm;
more preferably, the pore volume of the mesopores of the zeolite is 20 to 45% of the total pore volume of the zeolite; still further preferably, the pore volume of the mesopores of the zeolite is 25 to 35% of the total pore volume of the zeolite.

4. The porous bulky material according to claim 1 or 2, wherein the adhesive comprises an organic adhesive and/or an inorganic adhesive;
preferably, the organic adhesive includes one or a combination of two or more of polyacrylate suspension, polystyrene acetate suspension, polyvinyl acetate suspension, polyethylvinyl acetate suspension and polybutadiene rubber suspension;
preferably, the inorganic adhesive includes silica sol and/or alumina sol;
preferably, the mass of the solid component of the adhesive is 5 to 15% of the mass of the zeolite;
the dispersant includes one or a combination of two or more of ethanol, ethylene glycol, glycerin, sodium hexametaphosphate and sodium dodecylbenzenesulfonate.

5. The porous bulky material according to any one of claims 1 to 4, wherein the porous bulky material further comprises a pore-forming auxiliary agent and/or a reinforcing auxiliary agent;
preferably, the mass of the pore-forming auxiliary agent is 0.5 to 5%, more preferably 1 to 3% of the mass of the zeolite;
preferably, the pore-forming auxiliary agent includes one or a combination of two or more of ammonia water, hydrogen peroxide, ammonium chloride, ammonium nitrate, and sodium carbonate;
preferably, the mass of the reinforcing auxiliary agent is 3 to 15%, more preferably 5 to 10% of the mass of the zeolite;
preferably, the reinforcing auxiliary agent includes a fiber material; more preferably, the fiber material includes chemical fibers and/or plant fibers, and the chemical fibers preferably include inorganic fibers; more preferably, the fibers in the fiber material have a diameter of 1 µm to 10 µm, and a length of 20 µm to 1 mm.

6. The porous bulky material according to any one of claims 1 to 4, wherein the porous bulky material is prepared by mixing the zeolite, the adhesive, and the dispersant to form a raw material suspension, and shaping the raw material suspension by one of extrusion, spray coating, casting and molding; more preferably, the porous bulky material has a homogeneous characteristic impedance.

7. The porous bulky material according to any one of claims 1 to 4, wherein the porous bulky material is prepared by mixing the zeolite, the adhesive, and the dispersant to form a raw material suspension, and then evenly spreading the raw material suspension on fiber paper;
preferably, the fiber paper includes one or a combination of two or more of polyester fiber, polyamide fiber, polyacrylonitrile fiber, polyvinyl formal fiber, and PETT fiber;
preferably, the thickness of the fiber paper is 50 µm to 200 µm, and the thickness of the fiber paper loaded with the raw material suspension is 100 µm to 600 µm;
preferably, the fiber paper has macropores with a pore size of 10 µm to 100 µm;
preferably, the prepared porous bulky material is a material having a characteristic impedance that varies from layer to layer.

8. An electronic device, comprising the porous bulky material according to any one of claims 1 to 7;
preferably, the porous bulky material is filled in the electronic device for reducing wind noise.

9. The electronic device according to claim 8, wherein the electronic device has a microphone;
preferably, the electronic device includes a TWS earphone.

10. A device capable of reducing wind noise, comprising a body, an arc cover and a PCB board;
wherein the body is a tubular structure, one end of the body is connected to the PCB board, and the other end is connected to the arc cover, and an internal sound channel is arranged inside the body along the central axis;
an external sound channel is arranged inside the arc cover along the horizontal direction, and the external sound channel has a pinwheel-like structure as a whole, including a central cavity and several branch channels arranged in a radial pattern around the central cavity, wherein the central cavity communicates with the internal sound channel, and each branch channel is a streamlined arc structure.

11. The device capable of reducing wind noise according to claim 10, wherein the branch channels of the external sound channel are evenly distributed around the central cavity.

12. The device capable of reducing wind noise according to claim 10 or 11, wherein the diameter of each branch channel in the external sound channel gradually decreases from the outside to the inside of the device.

13. The device according to claim 10, wherein the center of the PCB board is provided with a pickup hole which communicates with the internal sound channel;
preferably, the horizontal section of the internal sound channel is circular in shape;
preferably, the axial section of the internal sound channel is rectangular or trapezoidal in shape.

14. The device according to claim 10 or 12, wherein the diameter of the port of the internal sound channel on the side close to the external sound channel matches the diameter of the central cavity; the diameter of the port of the internal sound channel on the side close to the PCB board is greater than or equal to the diameter of the pickup hole.

15. The device according to any one of claims 10, 13 and 14, wherein the porous bulky material according to any one of claims 1 to 7 is filled in the internal sound channel;
preferably, the porous bulky material has a characteristic impedance that varies from layer to layer, in the direction from the central cavity of the external sound channel to the PCB board;
more preferably, the characteristic impedance of the porous bulky material gradually increases in the direction from the central cavity of the external sound channel to the PCB board.

16. A device capable of reducing wind noise, comprising an external sound channel, a zeolite material, and a pickup hole, wherein the zeolite material is arranged between the external sound channel and the pickup hole; environmental wind can enter the device via the external sound channel, contact the zeolite material, and then reach the pickup hole.

17. The device according to claim 16, wherein the device is further provided with an internal sound channel, wherein the pickup hole, the internal sound channel, and the external sound channel communicates in this order, and the zeolite material is filled in the internal sound channel.

18. The device according to claim 16 or 17, wherein the zeolite material comprises one or a combination of two or more of an MFI structure molecular sieve, an FER structure molecular sieve, a CHA structure molecular sieve, an MEL structure molecular sieve, a TON structure molecular sieve, an MTT structure molecular sieve, and a ZSM-5 molecular sieve;
preferably, the particle size of the zeolite material is 0.5 µm to 10 µm;
preferably, the zeolite material comprises micropores with a pore size of 0.3 nm to 0.7 nm and mesopores with a pore size of 10 nm to 30 nm.

19. The device according to any one of claims 16 to 18, wherein the pore volume of the mesopores of the zeolite material is 20 to 45% of the total pore volume of the zeolite material;
preferably, the pore volume of the mesopores of the zeolite material is 25 to 35% of the total pore volume of the zeolite material.

20. The device according to claim 17, wherein the device further comprises an arc cover, and the external sound channel is arranged inside the arc cover along the horizontal direction of the arc cover;
preferably, the external sound channel has a pinwheel-like structure as a whole, including a central cavity and several branch channels arranged in a radial pattern around the central cavity, wherein the central cavity communicates with the internal sound channel, and each branch channel is a streamlined arc structure;
preferably, the branch channels of the external sound channel are evenly distributed around the central cavity.

21. The device according to any one of claims 16, 17 and 20, wherein the device further comprises a PCB board; and the pickup hole is arranged at the center of the PCB board.

22. The device according to any one of claims 16, 17, 20 and 21, wherein the device further comprises a body, wherein one end of the body is connected to the PCB board, and the other end is connected to the arc cover, and the internal sound channel is arranged inside the body along the central axis of the body;
preferably, the body is a tubular structure;
preferably, the diameter of the port of the internal sound channel on the side close to the external sound channel matches the diameter of the central cavity;
preferably, the diameter of the port of the internal sound channel on the side close to the PCB board is greater than or equal to the diameter of the pickup hole.

23. Use of the device capable of reducing wind noise according to any one of claims 10 to 22 in an electronic device having a microphone; preferably, the electronic device having a microphone includes a TWS earphone.
